# EUROPEAN PATENT SPECIFICATION

(11) **EP 2 846 206 B1**
(45) Date of publication and mention of the grant of the patent: **05.07.2017**
(21) Application number: 14180651.3
(22) Date of filing: 12.08.2014
(51) Int. Cl.: G05B 19/404, G05B 19/401

(54) **Device and method for automatically setting tool offset value of machine tool**
Vorrichtung und Verfahren zur automatischen Einstellung des Werkzeugversatzwerts einer Werkzeugmaschine
Dispositif et procédé pour régler automatiquement la valeur de décalage d'outil d'une machine-outil

(30) Priority: 06.09.2013 JP 2013184744
(43) Date of publication of application: 11.03.2015
(73) Proprietor: Nakamura-Tome Precision Industry Co., Ltd., Hakusan-shi, Ishikawa (JP)
(72) Inventor: Honma, Hideki, Ishikawa (JP)
(74) Representative: Isarpatent

(56) References cited:
- EP-A2- 0 269 286
- CA-A1- 2 071 764
- US-A- 6 157 869
- US-A1- 2006 021 208
- US-A1- 2006 079 988
- US-A1- 2010 111 630

## Description

### TECHNICAL FIELD

The present invention relates to a method and device for automatically setting a relative position relation between a tool post of a numerical control (NC) machine tool and an edge of a tool mounted on the tool post. The invention relates to such a method and device suitable for a computer numerical control (CNC) lathe having multiple turret tool posts or an automatic tool changer.

### BACKGROUND ART

NC machine tools machine a workpiece by controlling a position of a tool post based on a command of a machining program. However, since the workpiece is actually machined by an edge of a tool mounted on the tool post, if a relative position relation between a position of the tool post and a position of the edge is unknown, it is impossible to machine the workpiece in a correct shape.

Thus, after the tool is mounted on the tool post, a tool offset value indicating a positional gap between a reference position (coordinates of the tool post recognized by an NC device) of the tool post and a position (coordinates) of the tool edge is measured for each tool mounted on the tool post, and is registered with the NC device. When the workpiece is machined, the position of the tool post is shifted (offset) by the tool offset value of the tool used on the time. The measurement of the tool offset value is obtained by installing a tool setter at a predetermined position within a movement region of the edge of the tool and moving the tool post to read a position of the tool post when the edge of the tool comes into contact with a contact sensor of the tool setter.

The installation of the tool setter and the manipulation for bringing the edge of the tool into contact with the tool setter are usually done manually. However, in a lathe having multiple turret tool posts or a combined lathe having an automatic tool changer, numerous tools are used, and thus setting work of the tool offset value is very complicated. An attempt is made to automatically set the tool offset value by providing the tool setter in the machine tool, automatically advancing the tool setter into a machining region, and automatically bringing the edge of each tool into contact with the advanced tool setter.

On the other hand, to avoid interference (collision) between the tool or the tool post and the workpiece or other tool posts during checking of the machining program or during machining of the workpiece, shape data of the tools and the mechanical portions of the machine tool or the workpieces and an interference checking program are registered with a personal computer (PC) connected to the NC device, and an operation instructed by the machining program prior to actually machining the workpiece is virtually performed within the PC. Thus, a finish shape of the workpiece and the interference of the tool or the tool post during the machining are checked.

Document EP 0 269 286 A2 describes setting the cutting tip of a cutting tool of a lathe, wherein a tool-setting probe has a stylus tip for contacting the tool tip. The stylus tip is generally cube-shaped. In addition to a conventional vertical datum surface for setting the tool in the horizontal direction, it has a 45 DEG sloping datum surface. The tool is touched in the direction of arrow A against both surfaces. The horizontal difference between the two contact positions is a measure of the height of the tool tip, enabling it to be set in the vertical direction.

Document CA 2 071 764 A1 describes an apparatus for the automated measurement of a tool on a grinding machine or other machine tool having a coordinate carriage enabling the tool to be adjusted in two dimensions in a common plane, the carriage bears an imaging camera connected to an image processing computer and directed at the tool cutting-edge. The camera has a planar array with computed crosshairs stored as an associated reference system in the image processing computer, and the carriage is equipped with motors controlled by the image processing computer to adjust the carriage in both coordinate directions. The image processing computer operates under control of a program which constantly ascertains the distances of the cutting-edge from the coordinate axes of the crosshairs and outputs pulses to the motors to move the carriage until, in a new tool position, the deviations in the X and Z directions are nulled and hence the tool has been accurately measured. The image processing computer is connected through an interface to a digital counter displaying the toll cutting-edge's coordinate values X, Z in relation to the tool holder.

### DISCLOSURE OF THE INVENTION

### PROBLEM TO BE SOLVED BY THE INVENTION

When the tool offset value is automatically set, automatic advancement of the tool setter into the machining region of the machine tool is easy. However, the contact sensor of the tool setter has dimensions of about 1 mm square, and when the tool is brought into contact with the sensor, the tool should approach the contact sensor at a low speed at which the tool can be immediately stopped. Thus, to detect the tool edge in a short time, contact operation (low-speed approach of the tool) should be initiated after moving the tool edge to a position of about 1 mm in front of the contact sensor at a high speed.

To move the tool edge up to about 1 mm in front of the contact sensor at a high speed, a position relation between the tool post and the tool edge should be previously registered with the NC device within an error range of about 1 mm. There are a number of different tools, and numerous types of tool holders used when the tools are mounted on the tool posts. As such, work manually registering the position relation with the NC device without an error takes much time. Further, an input error is failed the automatic measurement of the tool offset value, or causes the tool to collide with the tool setter or another device, leading to damage of the machine.

Therefore, the detection of the tool edge by the tool setter is frequently manually performed even in the machine tool for which an automatic detecting means is provided, so the work of the detection of the tool edges requires tremendous effort and time and also makes heavy work burden of an operator, if the number of tools is increased, and also makes heavy work burden of an operator.

Further, when the interference of the tool is checked by the interference checking program, the shape data of the tools and the tool holders mounted on the tool posts should be previously registered with the PC. In the lathe having the automatic tool changer or the multiple turret tool posts, numerous tools are used, and thus work registering the shape data for these tools costs great trouble. Further, if there is an input error, interference occurs in spite of being checked, or a warning against the interference is given in spite of the fact that no interference occurs actually. Therefore, although the interference checking program is provided, it is an actual situation that the interference checking program is not often used.

An object of the invention is to obtain a technical means for making it possible to set a tool offset value for a machine tool mounted with numerous tools in a fully automatic manner. The invention is to provide a method and device for automatically setting a tool offset value of a turret lathe in which numerous tools are used to machine a workpiece or a lathe having an automatic tool changer, capable of eliminating a work burden or setting errors of an operator in setting the tool offset value of the turret lathe or the lathe having the automatic tool changer.

### MEANS FOR SOLVING PROBLEM

The invention is configured to measure a tool 2 mounted on a tool post 15 at an accuracy of 1 mm or less using a camera 41 or laser length measuring devices 4 (4a to 4d), to set a temporary tool offset value using shape data of the tool and edge correction number (data indicating a direction of an edge of the tool) designated to a machining program 51, to automatically bring the edge of the tool into contact with a tool setter 21 using the temporary tool offset value, and to acquire the accurate tool offset value to set the tool offset value for an NC device 5, thereby making it possible to set the tool offset value of the numerous tools 2 in a fully automatic manner.

Further, the invention is configured to check interference using the shape data of the tool which is acquired by the camera 41 or the laser length measuring devices 4 by means of an interference checking program 62, thereby making it possible to remove complicated input work of the tool shape data or input errors and to further simplify the interference checking.

A device for automatically setting a tool offset value of a machine tool according to the invention includes the features of claim 1 or claim 2.

The offset value computing means 65 computes the temporary tool offset value from the acquired shape data of the tool, the edge correction number of the tool used by a machining program 51, and/or a data table 66 with which a position of the edge corresponding to the shape of the tool is registered.

In the machine tool having a simulation means 61 for virtually machining a workpiece based on the machining program, a machining operation is simulated using the temporary tool offset value computed by the offset value computing means 65, and then detection of the tool edge using the tool setter 21 and registration of the tool offset value with the NC device 5 using the offset value setting means 54 are performed.

Further, in the machine tool having an interference checking means 62 for detecting interference between the tool 2 and the workpiece or mechanical portions 11 to 16 of the machine tool within a machining region during the machining, the interference is checked by the interference checking means, and then the detection of the tool edge using the tool setter 21 and the registration of the tool offset value with the NC device 5 using the offset value setting means 54 are performed.

A method of automatically setting a tool offset value of a machine tool using the device of the invention includes the features of claim 6 or 7.

### EFFECT OF THE INVENTION

According to the invention, the shape and edge position of each tool mounted on the turret tool posts or the tool mounted on the tool post from a tool magazine are automatically detected, and the tool offset value for the tool is automatically set with no hands. Accordingly, since an operator has only to mount a necessary tool on the turret tool post or the tool magazine, and the tool offset values are set for numerous tools there are effects in that a work burden of the operator can be removed, and manipulation errors or input errors can be prevented.

### BRIEF DESCRIPTION OF DRAWINGS

Fig. 1 is a schematic diagram of an embodiment using laser length measuring devices;
Fig. 2 is a diagram illustrating an edge circle and edge correction numbers;
Fig. 3 is a diagram illustrating a first example of an edge detection operation;
Fig. 4 is a diagram illustrating a second example of the edge detection operation;
Fig. 5 is a diagram illustrating a third example of the edge detection operation;
Fig. 6 is a diagram illustrating a fourth example of the edge detection operation; and
Fig. 7 is a schematic diagram of an embodiment using cameras.

Hereinafter, embodiments of the invention will be described taking a computer numerical control (CNC) lathe having opposed twin spindle and two turret tool posts by way of example. The CNC lathe includes a lathe body 1, a numerical control (NC) device 5, and a personal computer (PC) 6. The lathe body 1 includes left- and right-hand spindles opposite to each other on the same spindle axis a. The left-hand spindle is rotatably supported by a left-hand spindle stock 11 fixed to a bed, and has a left-hand chuck 13 mounted on a right-hand end thereof. The right-hand spindle is rotatably supported by a right-hand spindle stock 12 that is free to be movably positioned in a direction (Z-axial direction) parallel with the spindle axis a, and has a right-hand chuck 14 mounted on a left-hand end thereof.

When viewed across the spindle axis a from an operator, an upper tool post 15u and a lower tool post 15d are disposed at an inner upper side and a front lower side. These tool posts 15 (15u and 15d) are turret tool posts having turrets 16 (16u and 16d), each of which is mounted with multiple tools 2 via a holder 3. The tool posts 15 can be movably positioned in a Z-axial direction and an X-axial direction, which is orthogonal to the Z-axial direction and in which they move toward or away from the spindle axis a, by a command from the NC device 5.

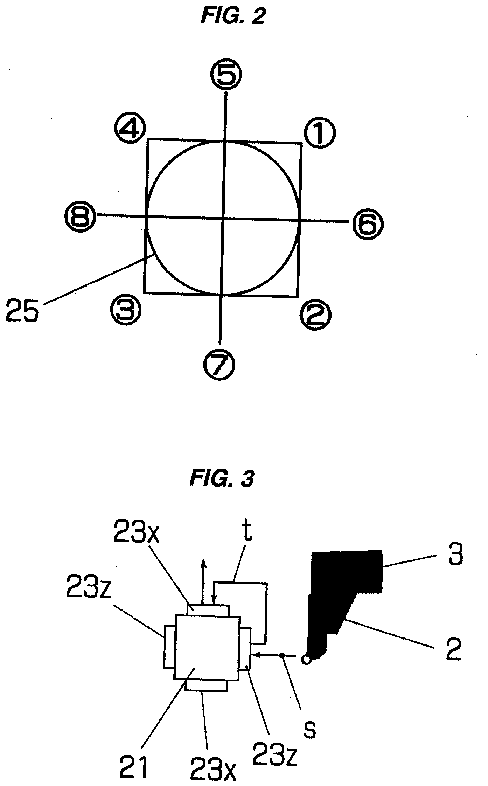

The left-hand spindle stock 11 is provided with a tool setter 21 and an advancing/retreating device 22 of the tool setter. The tool setter 21 is equipped, as illustrated in Fig. 3, with contact sensors 23z and 23x at opposite sides in the Z-axial direction and opposite sides in the X-axial direction at an advancement position. These contact sensors 23 (23z and 23x) are accurately positioned at predetermined positions on the spindle axis a in the event of the advancement.

A tool for which tool offset values are to be set is indexed in a direction toward the spindle axis a, and the tool post 15 is displaced. Thus, an edge of the corresponding tool is detected by the Z- and X-axial contact sensors 23 of the tool setter. At this time, differences between a position (coordinates) of the tool post 15 and positions (coordinates) of the contact sensors 23 coming into contact with the edge are Z- and X-axial tool offset values for the corresponding tool.

When the edge of the tool 2 is detected by the contact sensors 23, the edge of the tool should be positioned within a detection region of the contact sensors, or within a region of about 1 mm square. Further, when the edge of the tool comes into contact with each contact sensor, the contact sensor is broken if the tool post is not stopped immediately. Thus, when the tool edge is brought into contact with the contact sensor, manipulation is required to displace the tool edge up to a position s proximate to (of about 1 mm in front of) the contact sensor at a high speed (see Fig. 3 to 6), and to then displace the tool post in the Z-axial direction or the X-axial direction at such a low speed that the tool can be immediately stopped.

A machining program 51 is registered with the NC device 5. Since the edge of the tool is of a small circular arc (edge circle), contents of the machining program vary depending on which position of the circular arc is used. For example, in a certain type of NC device, as illustrated in Fig. 2, the machining program is made by dividing an edge circle 25 in a direction set at intervals of 45 degrees, giving numbers to the divisions, and determining the respective numbers for the respective tools. Accordingly, when the tool offset values are set, the edge needs to be detected in a direction corresponding to a direction of the number (edge correction number) used when the machining program is made. For example, if the machining program is made based on the direction of number 3 of Fig. 2, when the tool offset values are set, it is necessary to set the tool offset values by bringing the tool edge into contact with the contact sensors in the Z- and X-axial directions of a direction indicated in Fig. 3 by an arrow of a track t.

A conversion program 63 for converting the machining program 51 registered with the NC device 5 into a simulation program 61 is registered with the PC 6. To virtually machine a workpiece according to the machining program 51 using the simulation program 61, the tool offset values of the tools used for the machining are required.

Further, an interference checking program 62 and shape data of the chucks 13 and 14, the tool posts 15u and 15d, and the turrets 16u and 16d which are required on executing the interference checking program are registered with the PC 6. When the simulation program 61 is executed, the interference checking program 62 is executed at the same time. Thereby, it is possible to avoid the collision between the tool and the workpiece, the chuck, or the other devices which may occur when the workpiece is actually machined. However, to do so, the shape data of the tool used for the machining needs to be set for the PC 6.

The technology described above is the prior art. Hereinafter, the characteristic technology of the invention will be described.

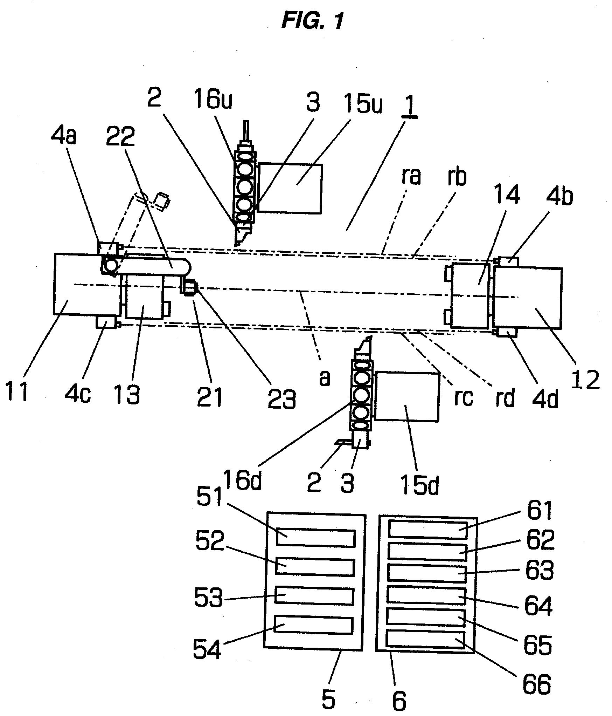

The left-hand spindle stock 11 and the right-hand spindle stock 12 are mounted with two pairs of, or four, laser length measuring devices 4 (4a to 4d) for projecting laser beams r (ra to rd) parallel with the spindle axis a toward the respective other sides at the sides of upper and lower tool posts 15u and 15d. Each of the laser length measuring devices 4 projects the laser beam having a width of several millimeters (for example, 3 mm) in a direction orthogonal to the sheet of Fig. 1. The laser length measuring devices are installed such that the laser beams ra and rb, and rc and rd from the opposite laser length measuring devices are not necessarily situated on the same line but the center of the width of them are situated on a Z-X plane (plane parallel with a movement plane of the tool post 15) including the spindle axis a.

The NC device 5 includes an offset value memory 52 for storing the tool offset values of the whole tools used for the machining, an edge detecting means 53 for bringing the edge of the tool 2 into contact with the tool setter 21 located at an advancement position using temporary tool offset values, and a offset value setting means 54 for obtaining tool offset values from a position of the tool post 15 when the edge detecting means detects the edge and setting the obtained tool offset values for the offset value memory 52. The temporary tool offset values computed by an offset value computing means 65 of the PC 6 are temporarily stored in the offset value memory 52.

The PC 6 includes a shape data memory 64 for storing shape data of the tools 2 which are acquired by the laser length measuring devices 4, an offset value computing means 65, a simulation means 61 for virtually machining a workpiece based on the machining program 51, and an interference checking means 62 for detecting interference between the tools and the workpiece or mechanical portions of the machine tool within a machining region during the machining. The offset value computing means 65 computes the temporary tool offset values from the shape data of the tool which is stored in the shape data memory 64 and from the edge correction numbers of the tools which are used by the machining program 51.

With respect to the tool 2 to be mounted on the turret 16, a data table 66, with which the data of a shape viewed in a direction orthogonal to the sheet of Fig. 1 when the tool is indexed to a machining position and an operation detecting the edge of the tool by the tool setter are registered, may be registered with the PC 6. When an edge position corresponding to a shape of the tool is registered with the data table 66, the offset value computing means 65 may be configured to compute the temporary tool offset values from the shape data of the tools which is stored in the shape data memory 64 and the edge positions corresponding to the shapes registered in the data table 66.

Next, an operation of automatically setting the tool offset values will be described. The tool intended to set the tool offset values is indexed in a direction toward the spindle axis a, a Z-directional position of the tool post on which the tool is mounted is fixed to intermittently displace the tool in the X-axial direction at intervals of, for instance, 0.5 mm, while projecting the laser beams r from the left- and right-hand laser length measuring devices 4 located at the tool post on which the tool is mounted. Measured values of the laser length measuring devices 4 are plotted at each displaced position. Thereby, shapes and dimensions of the tool 2 and the tool holder 3 that are cut by a thickness of the widths of the laser beams are acquired. By repeating such an operation, the shape data of all the tools (from which any tool for which the tool offset values have already been set may be excluded) mounted on the turrets 16 are acquired and stored in the shape data memory 64 of the PC.

The PC 6 acquires the edge correction number of each tool which is used by the machining program 51 from the NC device 5, and computes and stores the temporary tool offset values using the edge position of the tool, which is obtained by analyzing the stored shape data, and the edge correction numbers. Further, the PC 6 compares the stored shape data of each tool with the tool shapes registered with the table 66, acquires position information of the tool edge corresponding to the tool, and computes and stores the temporary tool offset values from dimensions of the shape data.

If the temporary tool offset values are computed above and stored in the offset value memory 52, the PC 6 executes the simulation program 61 using such values, thereby machining the workpiece in a cyberspace. Then, if a shape of the machined workpiece matches a shape of the workpiece prepared by computer-aided design (CAD), it is possible to confirm that the temporary tool offset values are correct on the whole. If not matched, it is regarded that there is a mistake in the acquisition of the shape data of the tools or in the machining program, and thus an alarm is generated to terminate the process.

The interference checking program 62 is executed in parallel with the execution of the simulation program 61, and the interference is checked using the acquired shape data of each tool. If the interference is found, it is regarded that there is a mistake in the acquired shape data or the machining program, and thus an alarm is generated to terminate the process.

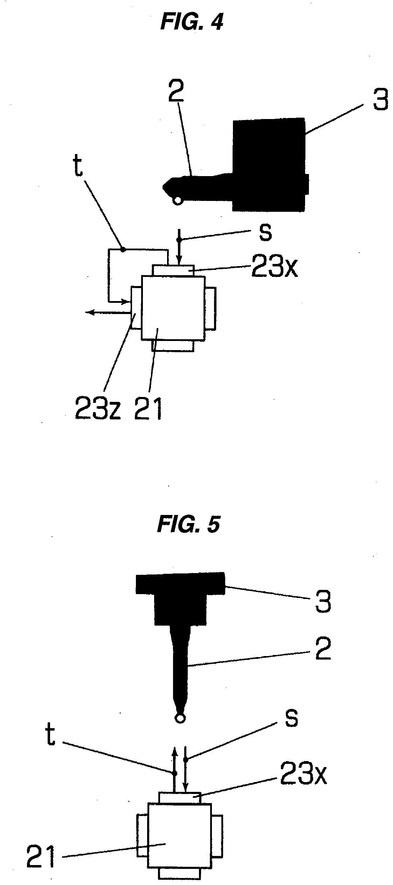

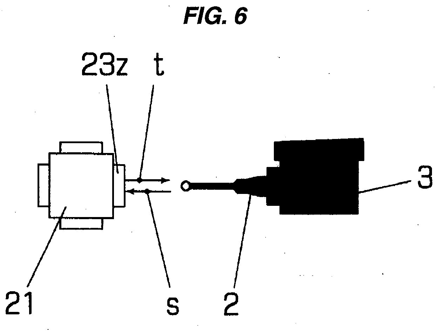

If correct machining is conducted in the virtual machining, and no interference occurs, the temporary tool offset values are sent to the NC device, and the tool edge detecting means 53 is executed on each tool using the temporary tool offset values. The edge detecting means 53 displaces the tool post 15 in correspondence with the tool shape, for instance, like the track t illustrated in Figs. 3 to 6. Fig. 3 is an example of the track for the tool whose edge correction number is number 3 of Fig. 2, Fig. 4 is an example of the track for the tool whose edge correction number is number 2 of Fig. 2, Fig. 5 is an example of the track for the tool whose edge correction number is number 5 of Fig. 2, and Fig. 6 is an example of the track for the tool whose edge correction number is number 7 of Fig. 2.

If a detection signal of the contact sensor 23 is received during the movement of the tool post 15 along the track t, tool offset values are acquired from a position of the tool post 15 at that time, and it proceeds to the next displacing or retreating operation. The acquired tool offset values are replaced with temporary tool offset values, and are registered with the offset value memory 52. If the tool offset values are set for all the tools, an automatic setting process is terminated.

According to the embodiment, since the temporary tool offset values are set within a tolerance of about 0.5 mm, the edge of the tool 2 can be safely and automatically brought into contact with the tool setter 21, and all the processes from the acquisition of the tool shape to the setting of the tool offset values can be automatically performed. Thus, a work burden of an operator can be considerably reduced, and there is also no fear of damage on the machine due to an input error without a need for proficiency of the operation.

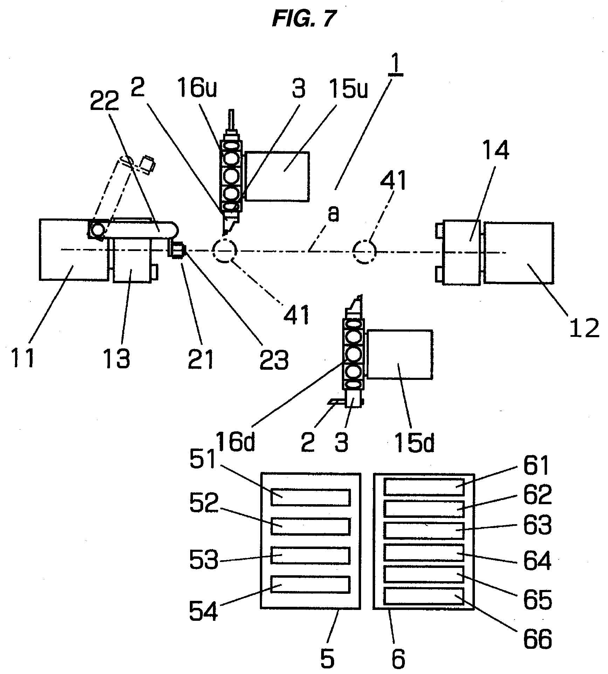

In the aforementioned embodiment, the tool shapes are acquired using the laser length measuring devices. However, another embodiment is possible. As illustrated in Fig. 7, cameras 41 for acquiring the shapes of the tools from directions orthogonal to movement planes of the tool posts 15 are provided, an image of each camera is compared with an image registered with the data table 66, thereby deciding a position of each tool edge. Analysis of the image makes it possible to acquire the temporary tool offset values.

However, in a machine tool in which numerous tools are mounted on each turret 16, there is a problem that it is difficult to acquire an accurate image of a target tool due to the hindrance of a neighboring tool, or to correctly analyze an image when a cutting fluid is attached to the tool. As such, with respect to the turret lathe, it is practical to acquire the shape data of the tool using the laser length measuring devices. However, with respect to the tools mounted on the tool posts by the automatic tool changer or the tools of the turret on which a small number of tools, for instance, four to six tools, are mounted, the shape data of the tools may be acquired by the cameras provided as described above, and the tool offset values may be automatically set in the same order as in the above embodiment.

Further, in the aforementioned embodiment, to check whether or not the automatically acquired shape data of the tools is correct, the PC carries out the virtual machining or the interference checking using the temporary tool offset values. However, it is not essential feature of the invention to perform the simulation using the temporary tool offset values or perform the interference checking using the acquired tool data. Even in the machine tool having neither the simulation program nor the interference checking program, the tool offset values may be automatically set according to the invention.

### EXPLANATION OF NUMERALS

- 2: tool
- 4: (4a to 4d) laser length measuring device
- 5: NC device
- 11: left-hand spindle stock
- 12: right-hand spindle stock
- 13: left-hand chuck
- 14: right-hand chuck
- 15: tool post
- 16: turret
- 21: tool setter
- 22: advancing/retreating device
- 41: camera
- 51: machining program
- 53: edge detecting means
- 54: offset value setting means
- 61: simulation program
- 62: interference checking program
- 65: offset value computing means
- 66: data table

## Claims

1. A device for automatically setting a tool offset value of a machine tool, the device comprising:
a tool shape acquiring means (4; 41) for acquiring shape data of a tool (2) mounted on a tool post (15) viewed in a direction orthogonal to a movement plane of the tool post (15);
an offset value computing means (65) for computing a temporary tool offset value from the acquired shape data of the tool (2) and from an edge correction number of the tool (2) which is used by a machining program;
a tool setter (21) and an advancing/retreating device (22) configured to advance/retreat the tool setter (21) between a retreat position and an advance position within a displacement region of an edge of the tool (2);
an edge detecting means (53) for bringing the edge of the tool into contact with a contact sensor (23) of the tool setter (21) located at the advance position using the temporary tool offset value computed by the offset value computing means (65) by displacing the edge of the tool (2) up to a position proximate to the contact sensor (23) at a high speed and then displacing the tool post (15) at such a low speed that the tool (2) can be immediately stopped; and
an offset value setting means (54) for obtaining a tool offset value from a position of the tool post (15) when the edge is detected and setting the obtained tool offset value for a numerical control device (5).

2. A device for automatically setting a tool offset value of a machine tool (2), the device comprising:
a tool shape acquiring means (4; 41) for acquiring shape data of a tool (2) mounted on a tool post (15) viewed in a direction orthogonal to a movement plane of the tool post (15);
a data table (66) with which an edge position corresponding to a shape of the tool (2) to be used is previously registered;
an offset value computing means (65) for computing a temporary tool offset value from the data table (66) and the acquired shape data of the tool (2);
a tool setter (21) and an advancing/retreating device (22) configured to advance/retreat the tool setter (21) between a retreat position and an advance position within a displacement region of an edge of the tool (2);
an edge detecting means (53) for bringing the edge of the tool (2) into contact with a contact sensor of the tool setter (21) located at the advance position using the temporary tool offset value computed by the offset value computing means (65) by displacing the edge of each tool up to a position proximate to the contact sensor (23) at a high speed and then displacing the tool post (15) at such a low speed that the tool (2) can be immediately stopped; and
an offset value setting means (54) for obtaining a tool offset value from a position of the tool post (15) when the edge is detected and to set the obtained tool offset value for a numerical control device (5).

3. The device for automatically setting a tool offset value according to claim 1 or 2, wherein the tool shape acquiring means (4) is configured to include laser length measuring devices (4) projecting laser beams in parallel with a displacement plane of the tool post (15) and in a direction orthogonal to a cutting and transferring direction of the tool (2), and acquires the shape data of the tool (2) based on multiple measured values of the laser length measuring devices (4) which are acquired while displacing the tool post (15) in the cutting and transferring direction of the tool (2).

4. The device for automatically setting a tool offset value according to claim 1 or 2, further comprising a simulation means (61) for virtually machining a workpiece based on the machining program (51),
wherein a machining operation is simulated using the temporary tool offset value.

5. The device for automatically setting a tool offset value according to claim 4, further comprising an interference checking means (62) for detecting interference between the tool (2) and the workpiece or mechanical portions of the machine tool within a machining region during the machining,
wherein the interference of the tool (2) during the machining is checked using the interference checking means (62) the shape data of the tool (2) which is acquired by the tool shape acquiring means (4; 41).

6. A method of automatically setting a tool offset value of a machine tool, the method comprising:
acquiring shape data of a tool (2) to be used for machining based on an image of a camera (41) installed in the machine tool or measured values of laser length measuring devices (4);
obtaining a temporary tool offset value of the tool (2) based on the shape data and data that is used by a machining program (51) and indicates a direction of an edge of the tool (2);
advancing a tool setter (21) to a predetermined position;
controlling a tool post (15) using the temporary tool offset value by means of a numerical control device (5), whereby bringing the edge of the tool (2) into contact with a contact sensor (23) of the advanced tool setter (21) by displacing the edge of the tool (2) up to a position proximate to the contact sensor (23) at a high speed and then displacing the tool post (15) at such a low speed that the tool (2) can be immediately stopped to acquire a tool offset value; and registering the tool offset value with the NC device (5).

7. A method of automatically setting a tool offset value of a machine tool, the method comprising:
registering a data table (66) with which an edge position corresponding to a shape of a tool (2) to be used for machining is registered;
acquiring shape data of the tool (2) to be used for machining based on an image of a camera (41) installed in the machine tool or measured values of laser length measuring devices (4);
obtaining a temporary tool offset value of the tool (2) from the shape data and the edge position obtained by retrieving the data table (66) based on the shape data;
advancing a tool setter (21) to a predetermined position;
controlling a tool post (15) using the temporary tool offset value by means of a numerical control (NC) device (5), whereby bringing the edge of the tool (2) into contact with a contact sensor (23) of the advanced tool setter (21) by displacing the edge of the tool (2) up to a position proximate to the contact sensor (23) at a high speed and then displacing the tool post (15) at such a low speed that the tool (2) can be immediately stopped to acquire a tool offset value; and registering the tool offset value with the NC device (5).

## Patentansprüche

1. Vorrichtung zum automatischen Einstellen eines Werkzeugversatzwertes einer Werkzeugmaschine, wobei die Vorrichtung Folgendes umfasst:
ein Werkzeugformerfassungsmittel (4; 41) zum Erfassen von Formdaten eines Werkzeugs (2), das an einer Werkzeugsäule (15) montiert ist, in einer Richtung orthogonal zu einer Bewegungsebene der Werkzeugsäule (15) betrachtet;
ein Versatzwertberechnungsmittel (65) zum Berechnen eines temporären Werkzeugversatzwertes anhand der erfassten Formdaten des Werkzeugs (2) und anhand einer Randkorrekturzahl des Werkzeugs (2), die durch ein Bearbeitungsprogramm verwendet wird;
einen Werkzeugeinsteller (21) und eine Vorschub/Rückzugs-Vorrichtung (22), die dafür ausgebildet ist, den Werkzeugeinsteller (21) zwischen einer zurückgezogenen Position und einer vorgeschobenen Position innerhalb einer Verschiebungsregion eines Randes des Werkzeugs (2) vorzuschieben bzw. zurückzuziehen;
ein Randdetektionsmittel (53) zum Inkontaktbringen des Randes des Werkzeugs mit einem Kontaktsensor (23) des Werkzeugeinstellers (21), der an der vorgeschobenen Position angeordnet ist, unter Verwendung des durch das Versatzwertberechnungsmittel (65) berechneten temporären Werkzeugversatzwertes durch Verschieben des Randes des Werkzeugs (2) bis zu einer Position nahe dem Kontaktsensor (23) mit einer hohen Geschwindigkeit und anschließendes Verschieben der Werkzeugsäule (15) mit einer derartig niedrigen Geschwindigkeit, dass das Werkzeug (2) sofort gestoppt werden kann; und
ein Versatzwerteinstellmittel (54) zum Erhalten eines Werkzeugversatzwertes anhand einer Position der Werkzeugsäule (15), wenn der Rand detektiert wird, und Einstellen des erhaltenen Werkzeugversatzwertes für eine numerische Steuerungsvorrichtung (5).

2. Vorrichtung zum automatischen Einstellen eines Werkzeugsversatzwertes einer Werkzeugmaschine (2), wobei die Vorrichtung Folgendes umfasst:
ein Werkzeugformerfassungsmittel (4; 41) zum Erfassen von Formdaten eines Werkzeugs (2), das an einer Werkzeugsäule (15) montiert ist, in einer Richtung orthogonal zu einer Bewegungsebene der Werkzeugsäule (15) betrachtet;
eine Datentabelle (66), in der eine Randposition, die einer Form des zu verwendenden Werkzeugs (2) entspricht, zuvor registriert wird;
ein Versatzwertberechnungsmittel (65) zum Berechnen eines temporären Werkzeugversatzwertes anhand der Datentabelle (66) und der erfassten Formdaten des Werkzeugs (2);
einen Werkzeugeinsteller (21) und eine Vorschub/Rückzugs-Vorrichtung (22), die dafür ausgebildet ist, den Werkzeugeinsteller (21) zwischen einer zurückgezogenen Position und einen vorgeschobenen Position innerhalb einer Verschiebungsregion eines Randes des Werkzeugs (2) vorzuschieben bzw. zurückzuziehen;
ein Randdetektionsmittel (53) zum Inkontaktbringen des Randes des Werkzeugs (2) mit einem Kontaktsensor des Werkzeugeinstellers (21), der an der vorgeschobenen Position angeordnet ist, unter Verwendung des durch das Versatzwertberechnungsmittel (65) berechneten temporären Werkzeugversatzwertes durch Verschieben des Randes jedes Werkzeugs bis zu einer Position nahe dem Kontaktsensor (23) mit einer hohen Geschwindigkeit und anschließendes Verschieben der Werkzeugsäule (15) mit einer derartig niedrigen Geschwindigkeit, dass das Werkzeug (2) sofort gestoppt werden kann; und
ein Versatzwerteinstellmittel (54) zum Erhalten eines Werkzeugversatzwertes anhand einer Position der Werkzeugsäule (15), wenn der Rand detektiert wird, und zum Einstellen des erhaltenen Werkzeugversatzwertes für eine numerische Steuerungsvorrichtung (5).

3. Vorrichtung zum automatischen Einstellen eines Werkzeugsversatzwertes nach Anspruch 1 oder 2, wobei das Werkzeugformerfassungsmittel (4) dafür ausgebildet ist, Laserlängenmessvorrichtungen (4) zu enthalten, die Laserstrahlen parallel zu einer Verschiebungsebene der Werkzeugsäule (15) und in einer Richtung orthogonal zu einer Schneid- und Transferrichtung des Werkzeugs (2) projizieren, und die Formdaten des Werkzeugs (2) auf der Basis mehrerer gemessener Werte der Laserlängenmessvorrichtungen (4) erfasst, die erfasst werden, während die Werkzeugsäule (15) in der Schneid- und Transferrichtung des Werkzeugs (2) verschoben wird.

4. Vorrichtung zum automatischen Einstellen eines Werkzeugsversatzwertes nach Anspruch 1 oder 2, die des Weiteren ein Simulationsmittel (61) zum virtuellen Bearbeiten eines Werkstücks auf der Basis des Bearbeitungsprogramms (51) umfasst,
wobei eine Bearbeitungsoperation unter Verwendung des temporären Werkzeugversatzwertes simuliert wird.

5. Vorrichtung zum automatischen Einstellen eines Werkzeugsversatzwertes nach Anspruch 4, die des Weiteren ein Interferenzüberprüfungsmittel (62) zum Detektieren einer Interferenz zwischen dem Werkzeug (2) und dem Werkstück oder mechanischen Abschnitten der Werkzeugmaschine innerhalb einer Bearbeitungsregion während des Bearbeitens umfasst,
wobei die Interferenz des Werkzeugs (2) während des Bearbeitens dadurch überprüft wird, dass das Interferenzüberprüfungsmittel (62) die Formdaten des Werkzeugs (2) nutzt, die durch das Werkzeugformerfassungsmittel (4, 41) erfasst wurden.

6. Verfahren zum automatischen Einstellen eines Werkzeugsversatzwertes einer Werkzeugmaschine, wobei das Verfahren Folgendes umfasst:
Erfassen von Formdaten eines Werkzeugs (2), das zum Bearbeiten verwendet werden soll, auf der Basis eines Bildes einer in der Werkzeugmaschine installierten Kamera (41) oder gemessener Werte von Laserlängenmessvorrichtungen (4);
Erhalten eines temporären Werkzeugversatzwertes des Werkzeugs (2) auf der Basis der Formdaten und von Daten, die durch ein Bearbeitungsprogramm (51) verwendet werden und eine Richtung eines Randes des Werkzeugs (2) anzeigen;
Vorschieben eines Werkzeugeinstellers (21) auf eine zuvor festgelegte Position;
Steuern einer Werkzeugsäule (15) unter Verwendung des temporären Werkzeugversatzwertes mittels einer numerischen Steuerungsvorrichtung (5) so, dass der Rand des Werkzeugs (2) in Kontakt mit einem Kontaktsensor (23) des vorgeschobenen Werkzeugeinstellers (21) gebracht wird, indem der Rand des Werkzeugs (2) bis zu einer Position nahe dem Kontaktsensor (23) mit einer hohen Geschwindigkeit verschoben wird, und dann die Werkzeugsäule (15) mit einer derartig niedrigen Geschwindigkeit verschoben wird, dass das Werkzeug (2) sofort gestoppt werden kann, um einen Werkzeugversatzwert zu erfassen; und
Registrieren des Werkzeugversatzwertes in der NC-Vorrichtung (5).

7. Verfahren zum automatischen Einstellen eines Werkzeugsversatzwertes einer Werkzeugmaschine, wobei das Verfahren Folgendes umfasst:
Registrieren einer Datentabelle (66), in der eine Randposition, die einer Form eines Werkzeugs (2) entspricht, das zum Bearbeiten verwendet werden soll, registriert wird;
Erfassen von Formdaten des Werkzeugs (2), das zum Bearbeiten verwendet werden soll, auf der Basis eines Bildes einer in der Werkzeugmaschine installierten Kamera (41) oder gemessener Werte von Laserlängenmessvorrichtungen (4);
Erhalten eines temporären Werkzeugversatzwertes des Werkzeugs (2) anhand der Formdaten und der Randposition, die durch Abrufen der Datentabelle (66) erhalten wird, auf der Basis der Formdaten,
Vorschieben eines Werkzeugeinstellers (21) auf eine zuvor festgelegte Position;
Steuern einer Werkzeugsäule (15) unter Verwendung des temporären Werkzeugversatzwertes mittels einer numerischen Steuer (NC)-Vorrichtung (5) so, dass der Rand des Werkzeugs (2) in Kontakt mit einem Kontaktsensor (23) des vorgeschobenen Werkzeugeinstellers (21) gebracht wird, indem der Rand des Werkzeugs (2) bis zu einer Position nahe dem Kontaktsensor (23) mit einer hohen Geschwindigkeit verschoben wird, und dann die Werkzeugsäule (15) mit einer derartig niedrigen Geschwindigkeit verschoben wird, dass das Werkzeug (2) sofort gestoppt werden kann, um einen Werkzeugversatzwert zu erfassen; und
Registrieren des Werkzeugversatzwertes in der NC-Vorrichtung (5).

## Revendications

1. Dispositif pour régler automatiquement une valeur de décalage d'outil d'une machine-outil, le dispositif comprenant :
un moyen d'acquisition de forme d'outil (4 ; 41) pour acquérir des données de forme d'un outil (2) monté sur un support porte-outil (15) vu dans une direction orthogonale à un plan de mouvement du support porte-outil (15) ;
un moyen de calcul de valeur de décalage (65) pour calculer une valeur de décalage d'outil temporaire à partir des données de forme acquises de l'outil (2) et à partir d'un numéro de correction de bord de l'outil (2) qui est utilisé par un programme d'usinage ;
un dispositif de réglage d'outil (21) et un dispositif d'avance/recul (22) configuré pour avancer/reculer le dispositif de réglage d'outil (21) entre une position de recul et une position d'avance dans une région de déplacement d'un bord de l'outil (2) ;
un moyen de détection de bord (53) pour amener le bord de l'outil en contact avec un capteur de contact (23) du dispositif de réglage d'outil (21) situé dans la position d'avance en utilisant la valeur de décalage d'outil temporaire calculée par le moyen de calcul de valeur de décalage (65) en déplaçant le bord de l'outil (2) jusqu'à une position proche du capteur de contact (23) à une vitesse élevée, puis en déplaçant le support porte-outil (15) à une vitesse si faible que l'outil (2) peut être arrêté immédiatement ; et
un moyen de réglage de valeur de décalage (54) pour obtenir une valeur de décalage d'outil à partir d'une position du support porte-outil (15) lorsque le bord est détecté, et régler la valeur de décalage d'outil obtenue pour un dispositif de commande numérique (5).

2. Dispositif pour régler automatiquement une valeur de décalage d'outil d'une machine-outil (2), le dispositif comprenant :
un moyen d'acquisition de forme d'outil (4 ; 41) pour acquérir des données de forme d'un outil (2) monté sur un support porte-outil (15) vu dans une direction orthogonale à un plan de mouvement du support porte-outil (15) ;
une table de données (66) avec laquelle une position de bord correspondant à une forme de l'outil (2) à utiliser est enregistrée au préalable ;
un moyen de calcul de valeur de décalage (65) pour calculer une valeur de décalage d'outil temporaire à partir de la table de données (66) et des données de forme acquises de l'outil (2) ;
un dispositif de réglage d'outil (21) et un dispositif d'avance/recul (22) configuré pour avancer/reculer le dispositif de réglage d'outil (21) entre une position de recul et une position d'avance dans une région de déplacement d'un bord de l'outil (2) ;
un moyen de détection de bord (53) pour amener le bord de l'outil (2) en contact avec un capteur de contact du dispositif de réglage d'outil (21) situé dans la position d'avance en utilisant la valeur de décalage d'outil temporaire calculée par le moyen de calcul de valeur de décalage (65) en déplaçant le bord de chaque outil jusqu'à une position proche du capteur de contact (23) à vitesse élevée, puis en déplaçant le support porte-outil (15) à une vitesse si faible que l'outil (2) peut être arrêté immédiatement ; et
un moyen de réglage de valeur de décalage (54) pour obtenir une valeur de décalage d'outil à partir d'une position du support porte-outil (15) lorsque le bord est détecté, et régler la valeur de décalage d'outil obtenue pour un dispositif de commande numérique (5).

3. Dispositif pour régler automatiquement une valeur de décalage d'outil selon la revendication 1 ou 2, dans lequel le moyen d'acquisition de forme d'outil (4) est configuré pour inclure des dispositifs de mesure de longueur laser (4) projetant des faisceaux laser parallèlement à un plan de déplacement du support porte-outil (15) et dans une direction orthogonale à une direction de coupe et de transfert de l'outil (2), et acquiert les données de forme de l'outil (2) sur la base de multiples valeurs mesurées des dispositifs de mesure de longueur laser (4) qui sont acquises lors du déplacement du support porte-outil (15) dans la direction de coupe et de transfert de l'outil (2).

4. Dispositif pour régler automatiquement une valeur de décalage d'outil selon la revendication 1 ou 2, comprenant en outre un moyen de simulation (61) pour usiner virtuellement une pièce de travail sur la base du programme d'usinage (51),
dans lequel une opération d'usinage est simulée en utilisant la valeur de décalage d'outil temporaire.

5. Dispositif pour régler automatiquement une valeur de décalage d'outil selon la revendication 4, comprenant en outre un moyen de vérification d'interférence (62) pour détecter une interférence entre l'outil (2) et la pièce de travail ou des parties mécaniques de la machine-outil dans une zone d'usinage pendant l'usinage,
dans lequel l'interférence de l'outil (2) lors de l'usinage est vérifiée en utilisant le moyen de vérification d'interférence (62) et les données de forme de l'outil (2) qui sont acquises par le moyen d'acquisition de forme d'outil (4, 41).

6. Procédé de réglage automatique d'une valeur de décalage d'outil d'une machine-outil, le procédé comprenant de :
acquérir des données de forme d'un outil (2) à utiliser pour l'usinage sur la base d'une image d'une caméra (41) installée dans la machine-outil ou de valeurs mesurées de dispositifs de mesure de longueur laser (4) ;
obtenir une valeur de décalage d'outil temporaire de l'outil (2) sur la base des données de forme et de données qui sont utilisées par un programme d'usinage (51) et qui indiquent une direction d'un bord de l'outil (2) ;
avancer un dispositif de réglage d'outil (21) dans une position prédéterminée ;
commander un support porte-outil (15) en utilisant la valeur de décalage d'outil temporaire au moyen d'un dispositif de commande numérique (5), ce qui amène le bord de l'outil (2) en contact avec un capteur de contact (23) du dispositif de réglage d'outil avancé (21) en déplaçant le bord de l'outil (2) jusqu'à une position proche du capteur de contact (23) à une vitesse élevée, puis en déplaçant le support porte-outil (15) à une vitesse si faible que l'outil (2) peut être arrêté immédiatement pour acquérir une valeur de décalage d'outil ; et enregistrer la valeur de décalage d'outil avec le dispositif de CN (5).

7. Procédé de réglage automatique d'une valeur de décalage d'outil d'une machine-outil, le procédé comprenant de :
enregistrer une table de données (66) avec laquelle une position de bord correspondant à une forme d'un outil (2) à utiliser pour l'usinage est enregistrée ;
acquérir des données de forme de l'outil (2) à utiliser pour l'usinage sur la base d'une image d'une caméra (41) installée dans la machine-outil ou de valeurs mesurées de dispositifs de mesure de longueur laser (4) ;
obtenir une valeur de décalage d'outil temporaire de l'outil (2) à partir des données de forme et de la position de bord obtenue en récupérant la table de données (66) sur la base des données de forme,
avancer un dispositif de réglage d'outil (21) dans une position prédéterminée ;
commander un support porte-outil (15) en utilisant la valeur de décalage d'outil temporaire au moyen d'un dispositif de commande numérique (CN) (5), ce qui amène le bord de l'outil (2) en contact avec un capteur de contact (23) du dispositif de réglage d'outil avancé (21) en déplaçant le bord de l'outil (2) jusqu'à une position proche du capteur de contact (23) à une vitesse élevée, puis en déplaçant le support porte-outil (15) à une vitesse si faible que l'outil (2) peut être arrêté immédiatement pour acquérir une valeur de décalage d'outil ; et enregistrer la valeur de décalage d'outil avec le dispositif de CN (5).
